# EUROPÄISCHE PATENTANMELDUNG

(11) **EP 3 217 219 A1**
(43) Veröffentlichungstag der Anmeldung: **13.09.2017**
(21) Anmeldenummer: 17158092.1
(22) Anmeldetag: 27.02.2017
(51) Int. Cl.: G03B 1/42, G03B 21/56, G03B 21/60, G03B 1/00, H04N 1/024

(54) **FILMABTASTER UND VERFAHREN ZUR DIGITALEN ARCHIVIERUNG EINES LAUFBILDFILMS**

(30) Priorität: 10.03.2016 DE 102016104420
(71) Anmelder: Piffl, Alfred, 82024 Taufkirchen (DE); Kober, Helmfried, 81667 München (DE)
(72) Erfinder: Piffl, Alfred, 82024 Taufkirchen (DE); Kober, Helmfried, 81667 München (DE)
(74) Vertreter: Hofstetter, Schurack & Partner

(57) **Zusammenfassung**

Die Erfindung betrifft einen Filmabtaster (10) zur digitalen Archivierung eines auf einem Filmstreifen (11) in Form einer Sequenz von Einzelbildern (13) analog gespeicherten Laufbildfilms mit einer Lichtquelle (12) zur Durchleuchtung eines jeweils abzubildenden Einzelbildbereichs (15) des Filmstreifens, einem opto-elektronischen Bildwandler (14) zur elektronischen Erfassung des jeweils abgebildeten Einzelbildbereichs und einer optischen Abbildungseinheit (16) zur Abbildung des Einzelbildbereichs auf den Bildwandler. Die optische Abbildungseinheit umfasst weiterhin eine reflektierende Projektionsfläche (18) und ein optisches Bauelement (19), welches dazu ausgelegt ist, ein von dem Einzelbildbereich ausgehendes Projektionslichtstrahlenbündel (B1) auf die Projektionsfläche auszurichten und ein von der Projektionsfläche ausgehendes Reflexionslichtstrahlenbündel (B2) auf den Bildwandler auszurichten, wobei das Projektionslichtstrahlenbündel und das Reflexionslichtstrahlenbündel zwischen dem optischen Bauelement und der Projektionsfläche jeweils innerhalb desselben optischen Teilpfads verlaufen. Die Erfindung betrifft weiterhin ein entsprechendes Verfahren. Durch die Projektion auf die reflektierende Projektionsfläche, beispielsweise eine weiße Leinwand, wird ein Zwischenbild erzeugt, bei welchem gegenüber einem direkten Abtasten des Films über eine unmittelbare optische Abbildung des Filmstreifens auf dem Bildwandler der durch den Filmstreifen bereitgestellte Kontrast deutlich reduziert ist.

## Beschreibung

Die Erfindung betrifft einen Filmabtaster zur digitalen Archivierung eines auf einem Filmstreifen in Form einer Sequenz von Einzelbildern analog gespeicherten Laufbildfilms gemäß dem Oberbegriff des Patentanspruchs 1. Weiterhin betrifft die Erfindung ein Verfahren zur digitalen Archivierung eines auf einem Filmstreifen in Form einer Sequenz von Einzelbildern analog gespeicherten Laufbildfilms gemäß dem Oberbegriff des Patentanspruchs 15.

Über mehr als 100 Jahre wurden Bilder analog aufgezeichnet. Laufbilder wurden auf perforierten analogen Bildträgern (Film) aufgezeichnet. Die Sichtung von Laufbildern erfolgt mittels Durchlichtprojektion der Bilder auf ein reflektierendes oder transparentes Material. Die Bearbeitung von Filmbildern, beispielsweise das Zusammenfügen von Bildsequenzen, wird auf Schneidetischen oder auf Bildbetrachtungstischen vorgenommen. Derartige Geräte arbeiten mit einer Lichtquelle, einer Vergrößerungsoptik und einer lichtdurchlässigen Mattscheibe. Die Mattscheibe reduziert den Kontrast des Bildes so weit, dass eine Beurteilung des Bildes hinsichtlich Inhalt, Auflösung und Kontrast möglich wird. Seit den 80er Jahren des 20. Jahrhunderts ermöglichen zusätzliche Einrichtungen, das analoge Bild elektronisch zu speichern. Mit den aktuell verfügbaren Möglichkeiten der elektronischen Speicherung von digitalisierten Bilddaten ergibt sich der Vorteil, dass diese Daten verlustfrei gespeichert und kopiert werden können.

Die seit dem Beginn des 21. Jahrhunderts extrem verbesserten Möglichkeiten der elektronischen Bild-Aufzeichnung und -Verbreitung erfordern eine kostengünstige Möglichkeit, den Archivbestand an analog gespeicherten Laufbildfilmen elektronisch zugänglich zu machen (sichten) und zu speichern. In diesem Zusammenhang ist aus der DE 10 2013 018 430 A1 ein Verfahren zum Abtasten eines Films bekannt, bei dem der Film mit einem Leuchtmittel beleuchtet und das vom Film kommende Lichtsignal in Kanälen mehreren Bildaufnahmevorrichtungen zugeführt wird, wobei eine Belichtung für die Kanäle derart eingestellt wird, dass mindestens in zwei Kanälen unterschiedliche Belichtungen des Films erreicht werden und das mittels der Bildaufnahmevorrichtungen aufgenommene Signal für ein Bild mit hohem Dynamikumfang gespeichert wird. Der Dynamikumfang - auch Kontrastumfang genannt - wird über eine Dichte der Schwärzung des Filmes ermittelt. Die Dichte der Schwärzung des Filmes wird in ganzen Zahlen ohne Einheit ausgedrückt. Eine Dichte von 0 bedeutet, dass das Objekt völlig ungeschwärzt ist, eine Dichte von 1 entspricht einer Schwärzung in Höhe von 90 Prozent, eine Dichte von 2 bedeutet eine Schwärzung in Höhe von 99 Prozent. Somit ergibt sich die Dichte aus dem Logarithmus der sogenannten Opazität (Lichtundurchlässigkeit), welcher als Kehrwert des Transmissionsgrads τ (Lichtdurchlässigkeit) definiert ist. Die nachfolgende Tabelle verdeutlicht den Zusammenhang zwischen den einzelnen Größen:

| Transmissionsgrad τ | durchgelassener Lichtanteil | Opazität | Dichte |
|---|---|---|---|
| 1 | 100 Prozent | 1 | 0 |
| 0,1 | 10 Prozent | 10 | 1 |
| 0,01 | 1 Prozent | 100 | 2 |
| 0,001 | 0,1 Prozent | 1000 | 3 |
| 0,0001 | 0,01 Prozent | 10000 | 4 |
| 0,00001 | 0,001 Prozent | 100000 | 5 |

Durch den Zehnerlogarithmus entspricht ein Schritt von 1 in der Dichte einer Verzehnfachung der Helligkeit. Aktuelle Videokamera-Sensoren können im Moment nur einen bestimmten Ausschnitt der Schwärzungen des Films differenzieren und weisen somit nur einen begrenzten Dynamikumfang auf. Neben dem Dynamikumfang spielt außerdem auch eine obere und untere Begrenzung eine Rolle, die sogenannte Minimal- und Maximaldichte. Nachfolgend ist der Umfang für übliche Objektdichten ausgewählter Beispiele dargestellt, nämlich CCD-Sensoren von 0 bis 3, Farbfilm (Herstellerangabe) von 0 bis 5, ausgewählte Schwarz-Weiß-Filme sogar bis zu 6, hochwertige Filmscanner nur 3 bis 4, die besten derzeit verfügbaren Kamerasysteme auf der Basis eines CMOS-Sensors erreichen hier bis zu 4.

Der Aufwand zur Abbildung des vollständigen Dynamikumfangs eines Durchlichtfilms ist somit erheblich, da verfügbare Bildwandler-Sensoren zur Digitalisierung des Bildinhalts nicht den vollem Umfang des verfügbaren Objektdichtebereichs abdecken können, sodass oberhalb oder unterhalb einer bestimmten Objektdichtengrenze von dem Filmmaterial bereitgestellte Helligkeitsunterschiede nicht mehr aufgelöst werden können, sondern nur noch einheitlich als größtmögliche oder geringstmögliche Schwärzung dargestellt werden.

Es ist daher Aufgabe der vorliegenden Erfindung, einen Filmabtaster sowie ein Verfahren zur digitalen Archivierung eines auf einem Filmstreifen in Form einer Sequenz von Einzelbildern analog gespeicherten Laufbildfilms bereitzustellen, welcher eine differenzierte Objektdichtendarstellung über den gesamten Dynamikumfang des zu archivierenden Filmmaterials mit einem geringeren technischen Aufwand ermöglicht.

Diese Aufgabe wird durch einen Filmabtaster mit den Merkmalen des Patentanspruchs 1 sowie durch ein Verfahren mit den Merkmalen des Patentanspruchs 15 gelöst. Vorteilhafte Weiterbildungen der vorliegenden Erfindung sind Gegenstand der abhängigen Ansprüche.

Die Erfindung geht von einem Filmabtaster zur digitalen Archivierung eines auf einem Filmstreifen in Form einer Sequenz von Einzelbildern analog gespeicherten Laufbildfilms aus, mit einer Lichtquelle zur Durchleuchtung eines jeweils abzubildenden Einzelbildbereichs des Filmstreifens, einem opto-elektronischen Bildwandler zur elektronischen Erfassung des jeweils abgebildeten Einzelbildbereichs, und einer optischen Abbildungseinheit zur Abbildung des Einzelbildbereichs auf dem Bildwandler. Erfindungsgemäß wird der Filmabtaster dadurch weitergebildet, dass die optische Abbildungseinheit eine reflektierende Projektionsfläche und ein optisches Bauelement umfasst, welches dazu ausgelegt ist:
a) zumindest ein mittels der Lichtquelle bei der Durchleuchtung des Einzelbildbereichs erzeugtes Projektionslichtstrahlenbündel auf die Projektionsfläche auszurichten, wobei das Projektionslichtstrahlenbündel in Richtung der Projektion zwischen dem optischen Bauelement und der Projektionsfläche innerhalb eines optischen Teilpfads verläuft, und
b) ein durch Reflexion des zumindest einen Projektionslichtstrahlenbündels an der Projektionsfläche erzeugtes Reflexionslichtstrahlenbündel auf den Bildwandler auszurichten, wobei das Reflexionslichtstrahlenbündel in einer zu der Richtung der Projektion entgegen gerichteten Reflexionsrichtung zwischen der Projektionsfläche und dem optischen Bauelement innerhalb desselben optischen Teilpfads verläuft.

Der Erfindung liegt die Erkenntnis zugrunde, dass durch eine Projektion auf eine reflektierende Projektionsfläche, beispielsweise eine weiße Leinwand, ein Zwischenbild erzeugt werden kann, bei welchem gegenüber einem direkten Abtasten des Films über eine unmittelbare optische Abbildung des Filmstreifens auf dem Bildwandler der durch den Filmstreifen bereitgestellte Kontrast deutlich reduziert ist. Während bei der Durchleuchtung des Filmstreifens ein Kontrastverhältnis von bis zu 1:10000 bereitgestellt ist, können derzeit verfügbare Bildwandler-Sensoren nur einen wesentlich geringeren Kontrastumfang bewältigen. Die Aufgabe, welche durch die Erfindung gelöst wird, ist somit eine einem analogen, optischen Lowpass-Filter entsprechende Funktion, bei der der hohe Kontrast des Films gebrochen werden muss. In herkömmlichen Schneidetischen wird das Bild über mehrere Oberflächenspiegel an eine Mattscheibe transportiert, das dann erst mittels Durchleuchtung der Mattscheibe zur Abbildung kommt. Das Bild wird also im Gegensatz zur vorliegenden Erfindung durch die Partikel im Glas der Mattscheibe verzerrt. Daher ist im Vergleich zu dieser Abbildungstechnik ein erheblicher Schärfegewinn zu erwarten.

Während herkömmliche Filmscanner direkt auf das Einzelbild des Filmstreifens blicken, wodurch zusätzlicher Aufwand entsteht, den hohen Kontrast zu reduzieren, ist bei der erfindungsgemäßen Anordnung die Kompression des Dynamikumfangs durch die Abbildung über ein Zwischenbild auf der Projektionsfläche gegeben. Somit ergibt sich eine deutlich preiswertere Möglichkeit, Bilder zu sichten und dauerhaft zu archivieren. Durch die Lichtstreuung an der reflektierenden Projektionsfläche reduziert sich der Kontrast des ursprünglichen Bildinhalts deutlich, wobei der Kontrastumfang beziehungsweise Dynamikumfang nicht in Form einer Beschneidung des ursprünglich verfügbaren Bereichs reduziert wird. Dieses würde nämlich bewirken, dass außerhalb der Beschneidungsgrenzen keine Helligkeitsunterschiede mehr feststellbar sind, sondern lediglich eine vollständige Schwärzung oder eine völlige Unschwärzung. Vielmehr wird der Dynamikumfang, welcher ursprünglich durch das Filmmaterial bereitgestellt wird, mittels des auf der Projektionsfläche bereitgestellten Zwischenbilds auf einen geringeren Umfang komprimiert. Damit werden zwar geringfügige Helligkeitsunterschiede, die in dem Filmbild noch unterscheidbar waren, in einem solch dynamikkomprimierten Bild nicht mehr wahrnehmbar, dafür sind allerdings über den gesamten ursprünglichen Dichtebereich Helligkeitsunterschiede, die einen gewissen Dichteunterschied aufweisen, über den gesamten Bereich wahrnehmbar. Somit können einheitlich schwarze oder weiße Bereiche, die auf dem ursprünglichen Filmbild noch differenzierbar waren, vermieden werden. Einheitlich weiße beziehungsweise schwarze Bilder sind hierbei auch im Hinblick auf Ausführungsformen mit Farbfilm entsprechend der jeweiligen Trennung in dem entsprechenden Farbkanal zu betrachten.

Der Einsatz des optischen Bauelements mit den dargestellten Eigenschaften ermöglicht eine verzeichnungsfreie Aufnahme des Zwischenbilds von der Projektionsfläche, da sich der Bildwandler quasi in einer Achse des durchleuchteten Filmstreifens und des projizierten Zwischenbilds befindet. Somit kann ein Bildfehler aufgrund einer unterschiedlichen Projektorperspektive und Kameraperspektive verhindert werden.

Eine ähnliche Wirkung ließe sich auch durch eine Rückprojektion auf eine Mattscheibe realisieren, wodurch ein optisches Bauelement verzichtbar würde. Die Erfinder haben jedoch erkannt, dass durch eine derartige Anordnung nicht die für eine digitale Archivierung gewünschte Bildqualität erzielt werden kann. In der Praxis wird nämlich ein solcherart erzeugtes Mattscheibenbild nie richtig scharf, was durch die in der Mattscheibe eingebetteten streuwirksamen Partikel bedingt ist. Des Weiteren hat sich bei der Rückprojektion, bei der das Bild von hinten auf eine Mattscheibe projiziert wird, gezeigt, dass die Helligkeitsverteilung nicht optimal über den gesamten Bildbereich erfolgt. Eine reflektierende Projektionsfläche hingegen kann in ihrer Oberfläche derart ausgestaltet werden, dass ein qualitativ hochwertiges Zwischenbild bereitstellbar ist. Dies kann beispielsweise mit einem technischen Papier realisiert werden, welches eine glatte Oberfläche aufweisen kann, jedoch lediglich nicht hochglänzend ausgeführt sein sollte. Idealerweise ist eine Struktur der Projektionsfläche kleiner als das Verhältnis von Bildhöhe des Zwischenbilds zu Zeilenzahl und/oder Bildbreite des Zwischenbilds zu Spaltenzahl, wobei Zeilenzahl und Spaltenzahl durch die Auflösung des Bildwandlers, also der verwendeten Kamera, gegeben sind.

Zusätzlich kann vorgesehen sein, während der Archivierung des Laufbildfilms mittels einer Anzeigeeinheit die gewandelten Bilddaten parallel zur Begutachtung zugänglich zu machen (sichten). Auf diese Weise lässt sich vorteilhaft eine digitale Bildeinheit für Schneidetische bereitstellen, bei denen gleichzeitig eine Bearbeitung von Filmbildern erfolgen soll, beispielsweise das Zusammenfügen von Bildsequenzen auf Schneidetischen oder Bildbetrachtungs-Tischen.

Die Lichtquelle kann durch eine Gasentladungslampe, insbesondere durch eine Hochdruck-Gasentladungslampe, eine Halogenlampe oder eine oder mehrere LEDs gebildet sein. Insbesondere kann durch eine Kombination mehrerer LEDs mit verschiedenen Wellenlängenbereichen ein kontinuierliches oder zumindest quasi-kontinuierliches Spektrum erzeugt werden, wobei das Lichtspektrum der Lichtquelle in einer besonders vorteilhaften Ausführungsform auf das jeweilige Farbspektrum der verwendeten Farbstoffe in der auf dem Film aufgebrachten Emulsion abgestimmt sein kann. Weiterhin können mehrere LEDs kombiniert werden, welche teilweise direkt das durch den Halbleiterchip der LED erzeugte Licht aussenden und ein Teil der LED der Lichtquelle einen Konversionsleuchtstoff trägt, welcher ein anderes Wellenlängenspektrum erzeugt als das direkt von der LED abgegebene.

In einer vorteilhaften Weiterbildung ist das optische Bauelement dazu ausgelegt, eine direkte Lichtstrahllenkung von dem Einzelbildbereich des Filmstreifens zu dem Bildwandler ohne die Beteiligung einer Reflexion an der Projektionsfläche zu verhindern. Dadurch wird vermieden, dass eine durch die Reflexion an der Projektionsfläche beabsichtigte Kompression des Dynamikumfangs eines abgetasteten Bildinhalts durch eine parallele Einstrahlung des Originalbilds verfälscht wird.

In einer weiteren vorteilhaften Ausführungsform sind die Lichtquelle, die Projektionsfläche und der Bildwandler als drei Periphereinheiten um das optische Bauelement als Zentraleinheit herum angeordnet, wobei die Zentraleinheit zwischen zwei der drei Periphereinheiten auf einer dieser beiden Periphereinheiten verbindenden ersten Gerade angeordnet ist und die verbleibende dritte Periphereinheit der drei Periphereinheiten auf einer zu der ersten Gerade orthogonalen zweiten Gerade, welche durch die Zentraleinheit führt, angeordnet ist. Die Position der Lichtquelle in der beschriebenen geometrischen Anordnung bezieht sich selbstverständlich auch auf die Position des abzutastenden Einzelbildbereichs. Mit anderen Worten erfolgt somit entweder in Projektionsrichtung oder in Reflexionsrichtung ein geradliniger Strahlengang, wohingegen in der jeweils anderen Richtung eine Ablenkung des Strahlengangs um 90 Grad erfolgt.

In einer weiteren vorteilhaften Ausführungsform ist das optische Bauelement durch einen halbdurchlässigen Spiegel ausgebildet. Insbesondere kann der Spiegel, das heißt die als Spiegel wirksame Oberflächenebene, in einem 45-Grad-Winkel zu der ersten Gerade ausgerichtet sein. Die beiden parallel zueinander angeordneten Oberflächen des halbdurchlässigen Spiegels können hierbei unterschiedlich ausgestaltet sein, sodass ein unter 45 Grad auf eine erste Oberfläche treffender Projektionsstrahl überwiegend auf geradem Weg durch den halbdurchlässigen Spiegel hindurchtritt, wohingegen nur ein geringerer Teil ebenso unter 45 Grad zum Lot der ersten Spiegeloberfläche reflektiert wird, wobei ein unter 45 Grad zu dem Lot auf einer der ersten gegenüberliegenden zweiten Spiegelfläche auftreffender Strahl überwiegend unter einem 90 Grad Winkel zu dem auftreffenden Strahl reflektiert wird und nur ein geringer Teil durch die zweite Spiegelfläche hindurchtritt.

Als Alternative zu dem halbdurchlässigen Spiegel kann das optische Bauelement durch zwei dreiseitige, gleichschenklige Prismen ausgebildet sein. Mit anderen Worten wird die Grundfläche der beiden Prismen jeweils durch ein gleichschenkliges Dreieck gebildet. Bevorzugt sind die zwei Prismen identisch ausgebildet. Insbesondere beträgt bei jedem der beiden Prismen der Winkel zwischen einer ersten Seitenfläche und einer zweiten Seitenfläche, welche jeweils durch gleich lange Schenkel, nämlich die Schenkel der Grundfläche sowie einer dazu parallel angeordneten Deckfläche begrenzt werden, 90 Grad. Eine zwischen der Basis der Grundfläche und der Basis der Deckfläche liegende dritte Seitenfläche wird als Basisfläche bezeichnet. Werden die derart ausgebildeten Prismen so angeordnet, dass sich die jeweiligen Basisflächen gegenüberstehen, insbesondere durch ein Verbindungsmittel beispielsweise Kanadabalsam, verbunden sind, entsteht eine quaderförmige Anordnung mit einer quadratischen Grundfläche. Durch den Einsatz einer derartigen Prismenanordnung kann der Bildung von Geisterbildern, welche durch die zweite Brechung an der Austrittsseite einer Glasscheibe eines halbdurchlässigen Spiegels entstehen können, entgegengewirkt werden.

In einer weiteren vorteilhaften Ausführungsform weist der Filmabtaster ein Absorptionselement auf, welches dazu ausgelegt ist, ein von dem Projektionslichtstrahlenbündel durch das optische Bauelement abgezweigtes Nebenlichtstrahlenbündel zu absorbieren. Hierdurch werden besonders vorteilhaft parasitäre Reflexionen innerhalb der Anordnung des Filmabtasters vermieden.

In einer weiteren vorteilhaften Ausführungsform ist der Filmabtaster dazu ausgelegt, den in einem jeweiligen Einzelbild gespeicherten Bildinhalt zumindest innerhalb vorgegebener Einzelbildabmessungen vollständig zu erfassen, wobei die Einzelbildabmessungen durch das für die Aufnahme des Laufbildfilms verwendete kinematografische Filmformat vorgegeben sind. Dadurch kann jeweils der vollständige Bildinhalt gesichert werden und bei einer späteren beabsichtigten oder unbeabsichtigten Vernichtung beziehungsweise Zerstörung des Original-Filmmaterials steht weiter jeweils der frühere Originalinhalt zur Verfügung.

Bevorzugt weist der Filmabtaster eine Filmstreifenpositioniereinrichtung zur Positionierung des Filmstreifens in dem Einzelbildbereich auf. Die Filmstreifenpositioniereinrichtung ist insbesondere dazu ausgelegt, zu einem Abtastzeitpunkt des Bildwandlers den Filmstreifen so innerhalb des Einzelbildbereichs zu positionieren, dass das Bilds mittels der optischen Abbildungseinheit auf den Bildwandler abgebildet wird.

In einer weiteren vorteilhaften Ausführungsform ist die Filmstreifenpositioniereinrichtung dazu ausgelegt, den Filmstreifen kontinuierlich durch den Einzelbildbereich zu transportieren, insbesondere mit einer vorgebbaren konstanten Transportgeschwindigkeit. Da das Filmmaterial sehr wertvoll ist und bei jedem Durchlauf eine Schädigungsgefahr besteht, ist eine schonende Behandlung des Filmmaterials bei einem Durchlauf wichtig. Dies kann insbesondere durch einen gleichmäßigen Transport ohne viele Beschleunigungs- und Verzögerungsphasen realisiert werden.

Bevorzugt umfasst der Filmabtaster eine innerhalb der optischen Abbildungseinheit angeordnete dynamische Strahllenkungseinheit, welche dazu ausgelegt ist, in Abhängigkeit von der Transportgeschwindigkeit das Projektionslichtstrahlenbündel auf dem Weg von dem Filmstreifen zu der Projektionsfläche so zu lenken, dass sich auf der Projektionsfläche ein stehender Bildausschnitt ergibt. Mit anderen Worten dient die dynamische Strahllenkungseinheit somit zum Zerlegen des auf dem Filmstreifen gespeicherten Laufbildfilms in die Einzelbilder der Sequenz, wobei das Zerlegen derart erfolgt, dass ein von der Filmstreifenpositioniereinrichtung durch den Einzelbildbereich transportiertes Einzelbild als stillstehendes Abbild auf den Bildwandler abgebildet wird. Die Strahllenkungseinheit kann als rotierender optischer Körper in Polygonform (Prisma) ausgebildet sein.

In einer vorteilhaften Weiterbildung ist die Lichtquelle dazu ausgelegt, synchronisiert mit der Filmstreifenpositioniereinrichtung pulsförmig betrieben zu werden, wobei ein Lichtpuls erzeugt wird, wenn sich das jeweilige Einzelbild in dem Einzelbildbereich befindet. Auf diese Weise kann auf eine optisch-mechanische Ausgleichsvorrichtung zur Kompensation einer FilmTransportgeschwindigkeit verzichtet werden, ohne dass sich die permanente Bewegung der Einzelbilder des Filmstreifens auf die Schärfe des elektronischen Bildes auswirkt.

Besonders bevorzugt kann vorgesehen sein, dass eine Pulsdauer zum pulsförmigen Betreiben der Lichtquelle kürzer ist als die Zeit, die sich aus der Transportgeschwindigkeit und einer vorgegebenen Streifenbreite ergibt, um die der Filmstreifen weiterläuft, wobei die Streifenbreite in Abhängigkeit von einem Abbildungsmaßstab der Abbildungseinheit durch eine Pixel-Breite des Bildwandlers gegeben ist. Hierdurch lässt sich ein sogenannter Blur-Effekt vermeiden, bei dem die Kanten nicht mehr als scharfe Konturen, sondern verwaschen wiedergegeben werden. Insbesondere eignen sich für ein derartiges Verfahren Bildwandler-Sensoren mit einem integrierenden Wandlerverhalten. Der Bildwandler kann durch einen CCD-Sensor oder durch einen CMOS-Sensor realisiert sein. Besonders bevorzugt kann der Bildwandler durch einen Ein-Chip-Sensor für die Verarbeitung der drei Farben Rot, Grün und Blau oder durch einen Drei-Chip-Sensor mit jeweils einem eigenen Sensorfeld für die drei Farben Rot, Grün und Blau realisiert sein.

In einer bevorzugten Ausführungsform weist die Projektionsfläche eine Oberflächenstrukturierung in einer Größenordnung auf, welche kleiner als das Verhältnis von Bildhöhe eines auf die Projektionsfläche projizierten Zwischenbilds zu Zeilenzahl und/oder Bildbreite des Zwischenbilds zu Spaltenzahl ist, wobei Zeilenzahl und/oder Spaltenzahl durch die Auflösung des Bildwandlers gegeben sind. Als ideal darf ein Oberflächenstrukturkörper nur halb so groß wie dieser Wert sein. Mit einer derartigen Oberflächenstrukturierung ist eine besonders gute Wirkung bei der Kompression des Dynamikumfangs des Filmmaterials bei der Abtastung des Zwischenbildes durch den Bildwandler erzielbar. Insbesondere lässt sich durch eine solche Reflexions-Kontrastbrechung eine deutlich höhere Abbildungsqualität erzielen als mittels einer Rückprojektion auf eine Mattscheibe, wo infolge der eingelagerten, zur Streuung des von der Rückseite her projizierten Lichts eingelagerten Partikel ein diffuseres Bild mit geringerer Schärfe erzeugt wird.

In einer weiteren vorteilhaften Ausführungsform weist die Projektionsfläche zur Vermeidung einer Polarisationsebenenänderung zwischen dem Projektionslichtstrahlenbündel und dem Reflexionslichtstrahlenbündel eine mit einem metallpigmentierten Lack beschichtete Oberfläche auf oder ist als retro-reflektierende Leinwand ausgebildet. Hierbei kann durch Verwendung von polarisiertem Projektionslicht, insbesondere von linear-polarisiertem Projektionslicht, bei einer geeigneten Ausgestaltung des optischen Bauelements eine gezielte Steuerung einer Transmission in Abhängigkeit von einer Polarisations-Vorzugsrichtung ausgenutzt werden, um bei dem Durchtritt des Projektionslichtstrahlenbündels durch das optische Bauelement und dem Durchtritt des Reflexionsstrahlenbündels durch das optische Bauelement jeweils einen höheren Anteil des projizierten beziehungsweise reflektierten Lichts auf den jeweiligen optischen Nutzpfad auszurichten. Hierdurch kann bei einer gleichen Beleuchtungsintensität am Ort des Bildwandlers mit einer geringeren Beleuchtungsintensität an dem Filmstreifen gearbeitet werden.

In einer vorteilhaften Weiterbildung ist die Projektionsfläche dazu ausgelegt, eine Polarisationsebenenänderung zwischen dem Projektionslichtstrahlenbündel und dem Reflexionslichtstrahlenbündel in Form einer Drehung der Polarisationsebene bei der Reflexion um 90 Grad nach rechts oder links um eine durch die Ausbreitungsrichtung der beiden Lichtstrahlenbündel gegebene Achse zu bewirken. In Verbindung mit einem halbdurchlässigen Spiegel kann somit vorgesehen sein, dass Licht aus einer ersten Richtung, nämlich der Projektionsrichtung, welches eine geeignete lineare Polarisation in einer ersten Ebene aufweist, ungehindert durch den Spiegel hindurchtritt, dahinter auf die Projektionsfläche trifft, in der Polarisationsebene in der Folge um 90 Grad gedreht wird, anschließend zurückreflektiert wieder auf die nunmehr rückseitige Seite des halbdurchlässigen Spiegels trifft. Der Spiegel kann für die nunmehr um 90 Grad gedrehte Polarisationsrichtung nicht mehr durchlässig oder weniger durchlässig sein sondern einen hohen Reflexionsfaktor aufweisen, so dass das auf die rückseitige Seite des halbdurchlässigen Spiegels treffende Licht durch den halbdurchlässigen Spiegel um 90 Grad von der Reflexionsrichtung auf den Bildwandler umgelenkt wird. Hierdurch kann insbesondere der Anteil des auf den Filmstreifen zurückgeleiteten ursprünglichen Projektionslichtstrahls deutlich reduziert werden.

Die Erfindung geht weiterhin aus von einem Verfahren zur digitalen Archivierung eines auf einem Filmstreifen in Form einer Sequenz von Einzelbildern analog gespeicherten Laufbildfilms, umfassend ein Durchleuchten eines jeweils abzubildenden Einzelbildbereichs, ein Abbilden des Einzelbildbereichs auf einen opto-elektronischen Bildwandler, und elektronisches Erfassen des jeweils abgebildeten Einzelbildbereichs mittels des Bildwandlers. Das Verfahren wird erfindungsgemäß weitergebildet durch
a) ein Ausrichten zumindest eines bei der Durchleuchtung des Einzelbildbereichs erzeugten Projektionslichtstrahlenbündels auf eine Projektionsfläche mittels eines optischen Bauelements, wobei das Projektionslichtstrahlenbündel in Richtung der Projektion zwischen dem optischen Bauelement und der Projektionsfläche innerhalb eines optischen Teilpfads verläuft, und
b) ein Ausrichten eines durch Reflexion des zumindest einen Projektionslichtstrahlenbündels an der Projektionsfläche erzeugten Reflexionslichtstrahlenbündels auf den Bildwandler, wobei das Reflexionslichtstrahlenbündel in einer zu der Richtung der Projektion entgegen gerichteten Reflexionsrichtung zwischen der Projektionsfläche und dem optischen Bauelement innerhalb desselben optischen Teilpfads verläuft.

Die für den erfindungsgemäßen Filmabtaster beschriebenen Vorteile und Merkmale sowie Ausführungsformen gelten gleichermaßen für das entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile und Merkmale ergeben sich anhand der vorliegenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in vereinfachter schematischer Darstellung ein bevorzugtes Ausführungsbeispiel eines erfindungsgemäßen Filmabtasters in allgemeiner Form,
- Fig. 2: in vereinfachter schematischer Darstellung ein zweites Ausführungsbeispiel des erfindungsgemäßen Filmabtasters mit einem halbdurchlässigen Spiegel in einer ersten Anordnung,
- Fig. 3: in vereinfachter schematischer Darstellung ein zweites Ausführungsbeispiel des erfindungsgemäßen Filmabtasters mit einem halbdurchlässigen Spiegel in einer perspektivischen Ansicht in einer zweiten Anordnung, und
- Fig. 4: in vereinfachter schematischer Darstellung ein drittes Ausführungsbeispiel des erfindungsgemäßen Filmabtasters in einer noch weiter konkretisierten Ausgestaltung.

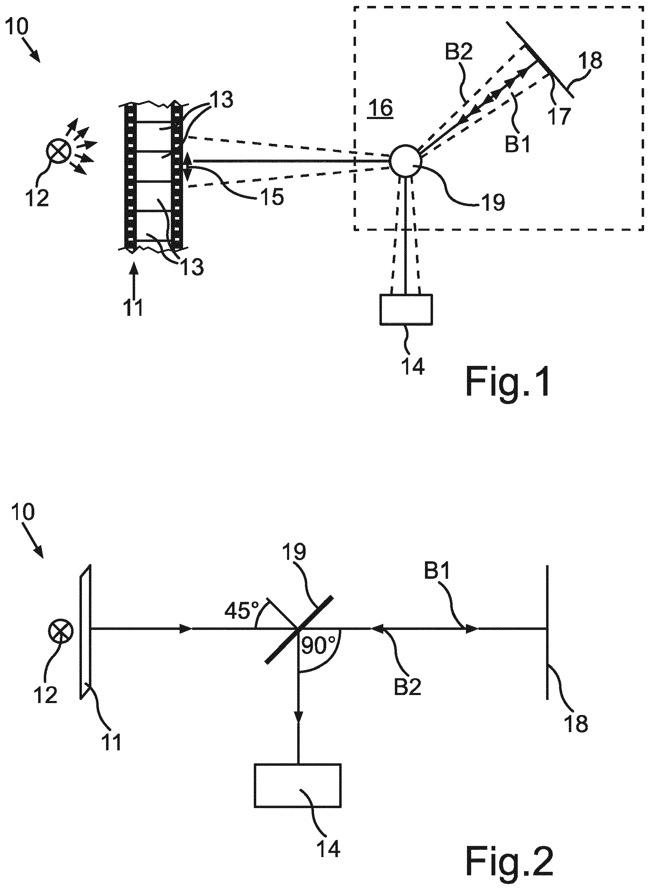

Fig. 1 zeigt einen Filmabtaster 10, welcher eine Lichtquelle 12 zum Durchleuchten eines Filmstreifens 11 umfasst, auf dem ein analog gespeicherter Laufbildfilm in Form einer Sequenz von Einzelbildern 13 gespeichert ist. Der Laufbildfilm auf dem Filmstreifen 11 soll Bild für Bild mittels eines opto-elektronischen Bildwandlers 14 erfasst werden. Hierdurch ist jeweils ein Einzelbild 13 mittels einer optischen Abbildungseinheit 16 auf den Bildwandler 14 abzubilden. Der Bereich des Filmstreifens 11, welcher auf den Bildwandler 14 mittels der optischen Abbildungseinheit 16 abgebildet wird, ist als Einzelbildbereich 15 gekennzeichnet. Idealerweise erfolgt eine Abtastung des Bildwandlers 14 zu dem Zeitpunkt, in dem jeweils ein Einzelbild 13 genau in dem abzubildenden Einzelbildbereich 15 positioniert ist.

Die optische Abbildungseinheit 16 umfasst eine reflektierende Projektionsfläche 18, auf welche ein Zwischenbild 17 projiziert wird. Das Zwischenbild 17 wird hierbei von einem Projektionslichtstrahlenbündel B1 erzeugt. Ein optisches Bauelement 19 ist dazu ausgelegt, das Projektionslichtstrahlenbündel B1, welches von dem abzubildenden Einzelbildbereich 15 ausgeht, auf die Projektionsfläche 18 auszurichten. Ein von der Projektionsfläche 18, genauer von dem Zwischenbild 17, ausgehendes Reflexionsstrahlenbündel B2 wird auf demselben Weg zurückreflektiert, auf dem zuvor das Projektionslichtstrahlenbündel B1 zur Erzeugung des Zwischenbildes 17 gelangt ist, nämlich einem optischen Teilpfad zwischen dem optischen Bauelement 19 und der Projektionsfläche 18. Auf diesem optischen Teilpfad verlaufen das Projektionslichtstrahlenbündel B1 und das Reflexionsstrahlenbündel B2 exakt deckungsgleich. Das optische Bauelement 19 ist weiterhin dazu ausgelegt, das von der Projektionsfläche 18 zurückgeworfene Reflexionslichtstrahlenbündel B2 auf den Bildwandler 14 auszurichten. Die in der Fig. 1 dargestellten Lichtstrahlenbündel stellen den gemäß der Erfindung genutzten optischen Pfad dar. Aufgrund der technisch tatsächlich verfügbaren optischen Mittel kann sich ein solch idealisierter Verlauf als nicht realisierbar erweisen. Insbesondere können in praktisch verfügbaren Anordnungen Nebenlichtbündel auftreten, welche sich aufgrund der nichtidealen Eigenschaften eines tatsächlich verfügbaren optischen Bauelements 19 ergeben. Um einen Intensitätsschwund in dem Projektionslichtstrahlenbündel B1, welches von dem zu erfassenden Einzelbildbereich 15 des Filmstreifens 11 ausgeht, bei dem Durchtritt durch das optische Bauelement 19 in der Darstellung gemäß der Fig. 1 nicht berücksichtigen zu müssen und um somit eine Unübersichtlichkeit zu vermeiden, kann der tatsächlich auftretende physikalische Effekt dahingehend berücksichtigt werden, dass das Projektionslichtstrahlenbündel B1 von dem Einzelbildbereich 15 ausgehend durch das optische Bauelement vollständig hindurchtritt und weiterhin als Projektionslichtstrahlenbündel B1 seinen Weg auf dem optischen Teilpfad zu der Projektionsfläche 18 fortsetzt. Zusätzlich kann ein weiteres Projektionslichtstrahlenbündel B1', welches in der Fig. 1 nicht dargestellt ist, von dem Einzelbildbereich 15 ausgehend auf das optische Bauelement 19 treffen und von dort aus auf einen von dem optischen Teilpfad abweichenden Nebenpfad ausgerichtet werden. Entsprechende Überlegungen sind in gleicher Weise auch auf das Reflexionslichtstrahlenbündel B2', welches von der reflektierenden Projektionsfläche 18 auf das optische Bauelement 19 zurückreflektiert werden kann, anzuwenden.

Fig. 2 zeigt eine konkretisierte Ausführungsform des Filmabtasters 10, bei welchem das optische Bauelement 19 als halbdurchlässiger Spiegel ausgebildet ist. Der halbdurchlässige Spiegel ist hierbei zwischen der Lichtquelle 12 beziehungsweise dem Filmstreifen 11 und der Projektionsfläche 18 angeordnet, wobei das Lot auf den beiden zueinander parallelen Spiegeloberflächen mit einer Verbindungsgeraden zwischen der Lichtquelle 12 und der Projektionsfläche 18 einen Winkel von 45 Grad bildet. In der Anordnung gemäß der Fig. 2 tritt somit das Projektionslichtstrahlenbündel B1 ausgehend von dem Filmstreifen 11 geradlinig durch das optische Bauelement 19 in Form des halbdurchlässigen Spiegels hindurch. Gemäß dem allgemein bekannten Reflexionsgesetz (Einfallswinkel = Ausfallswinkel) wird das von der Projektionsfläche 18 reflektierte Reflexionslichtstrahlenbündel B2, welches mit dem Lot auf den zueinander parallelen Oberflächen des halbdurchlässigen Spiegels einen Winkel von 45 Grad einschließt unter einem Winkel von ebenfalls 45 Grad zu dem Lot reflektiert, und somit eine Gesamtablenkung des Reflexionslichtstrahlenbündels B2 an dem optischen Bauelement 19 von 90 Grad erzielt, bevor das Reflexionslichtstrahlenbündels B2 auf den Bildwandler 14 trifft.

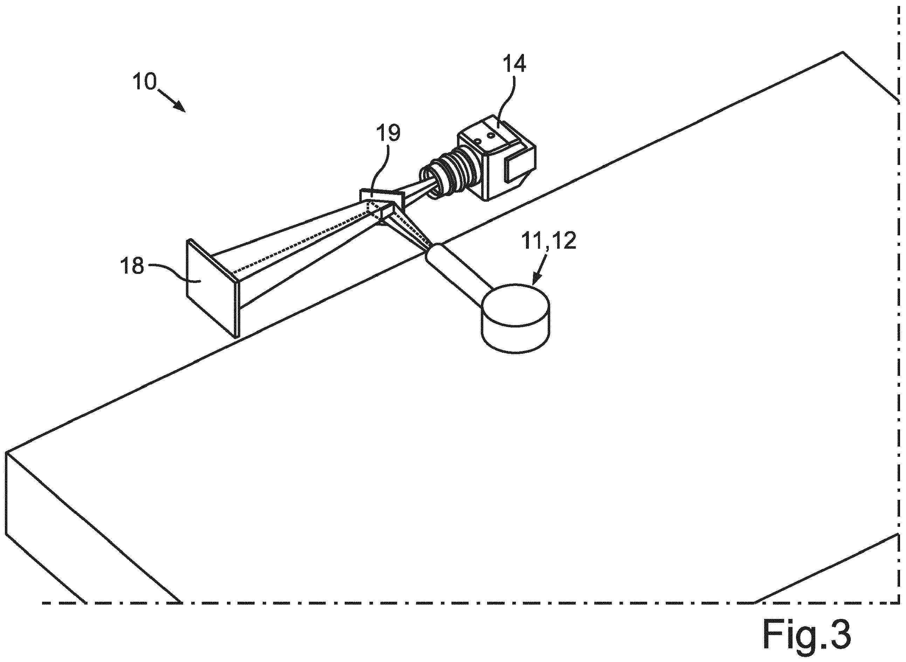

Fig. 3 zeigt eine perspektivische Ansicht einer alternativen Anordnung zu der schematischen 2D-Darstellung der Fig. 2. Im Unterschied zu der vorhergehenden Darstellung ist hier das Projektionslichtstrahlenbündel B1 nicht dasjenige Lichtstrahlenbündel, welches das optische Bauelement 19 in Form des halbdurchlässigen Spiegels in geradliniger Richtung passiert, sondern dasjenige Lichtstrahlenbündel, welches an der spiegelnden Oberfläche des optischen Bauelements 19 reflektiert und somit gegenüber der eingestrahlten Richtung um 90 Grad abgelenkt wird. Dementsprechend sind auch die weiteren Rollen vertauscht, denn das Reflexionslichtstrahlenbündel B2 ist nunmehr dasjenige, welches ausgehend von der Projektionsfläche 18 das optische Bauelement 19 auf dem Weg zu dem Bildwandler 14 in geradliniger Richtung passiert, ohne abgelenkt zu werden. Um gegebenenfalls Mehrfachreflexionen, welche sich störend auswirken können, zu vermeiden, ist es wünschenswert, die Reflexions- beziehungsweise Transmissionseigenschaften des optischen Bauelements dahingehend zu beeinflussen, dass jeweils ein Großteil der jeweiligen Lichtstrahlenbündel den beabsichtigten Pfad nimmt. Beeinflussungsmöglichkeiten können hierbei durch geeignete Oberflächenbeschichtungen sowie durch Verwendung von polarisiertem Licht in Kombination mit entsprechenden filterwirksamen Eigenschaften des optischen Bauelements 19 bereitgestellt sein.

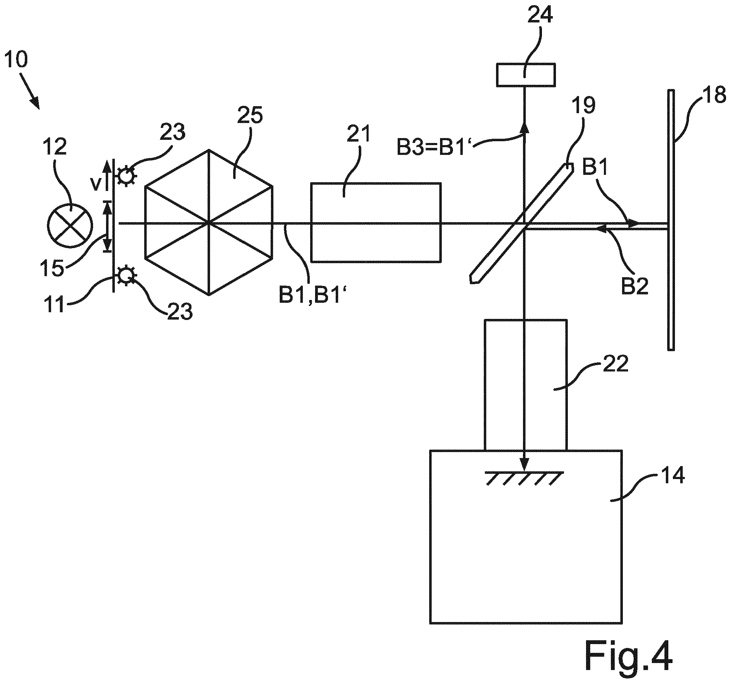

Fig. 4 zeigt eine weiter konkretisierte Ausführungsform des Filmabtasters 10 in der bereits aus der Fig. 2 bekannten Anordnung. Zusätzlich zu den bereits in Fig. 2 dargestellten Elementen weist der Filmabtaster 10 in dieser Ausführungsform zusätzlich ein Absorptionselement 24 auf, welches dazu ausgelegt und derart angeordnet ist, ein Projektionslichtstrahlenbündel B1', welches an dem optischen Bauelement 19 in Form eines halbdurchlässigen Spiegels als Nebenlichtstrahlenbündel B3 reflektiert wird, zu absorbieren und dadurch weitere störende Reflexionen zu vermeiden. Zusätzlich kann die optische Abbildungseinheit 16 ein erstes Abbildungselement 21 (Optik 1) sowie ein zweites Abbildungselement 22 (Optik 2) aufweisen, welche jeweils dazu ausgelegt sind, in Zusammenwirken mit dem optischen Bauelement 19 den abzubildenden Einzelbildbereich 15 des Filmstreifens 11 auf das Zwischenbild 17 auf der Projektionsfläche 18 (Leinwand) beziehungsweise das Zwischenbild 17 auf dem Bildwandler 14 abzubilden. Weiterhin kann der Filmabtaster 10 eine Filmstreifenpositioniereinrichtung 23 aufweisen, welche dazu ausgelegt ist, den Filmstreifen 11 vorzugsweise kontinuierlich durch den Einzelbildbereich 15 zu transportieren, insbesondere mit einer vorgebbaren konstanten Transportgeschwindigkeit v. Damit sich trotz des sich ständig mit der Transportgeschwindigkeit v bewegenden Einzelbilds 13 durch den Einzelbildbereich 15 ein stehendes Abbild auf dem Bildwandler 14 ergibt, kann des Weiteren eine dynamische Strahllenkungseinheit 25, bevorzugt in Form eines rotierbaren Polygons (Prisma), vorgesehen sein, welches dazu dient, den kontinuierlich vorbei transportierten Film bei der Erfassung durch den Bildwandler 14 in seine Einzelbilder zu zerlegen.

Wird anstelle des halbdurchlässigen Spiegels eine Anordnung von zwei gleichschenkligen Prismen verwendet, so ersetzen diese den halbdurchlässigen Spiegel in den Anordnungen gemäß der Fig. 2, 3 und 4 derart, dass die beiden sich berührenden und/oder zusammengekitteten Basisflächen der zwei Prismen an die Stelle der Spiegelfläche des halbdurchlässigen Spiegels treten. Der Lichteintritt beziehungsweise Lichtaustritt an einer ersten Seitenfläche oder einer zweiten Seitenfläche erfolgt im Falle eines 90-Grad-Dreiecksprismas jeweils senkrecht zu der Eintritts- beziehungsweise Austrittsfläche.

Die Ausführungsbeispiele dienen lediglich der Erläuterung der Erfindung und sind für diese nicht beschränkend. Insbesondere die Art des optischen Bauelements 19 und die Anordnung der als Periphereinheiten 12, 14, 18 um das optische Bauelement 19 als Zentralelement kann entsprechend den technischen Realisierungsmöglichkeiten der Erfindung beliebig angeordnet sein, ohne den Gedanken der Erfindung zu verlassen.

Somit wurde voranstehend gezeigt, wie ein Filmabtaster beziehungsweise ein Verfahren zur digitalen Archivierung eines auf einem Filmstreifen in Form einer Sequenz von Einzelbildern analog gespeicherten Laufbildfilms in einem digitalen Schneidetisch zu einer kostengünstigen Sichtung und Aufzeichnung von analogem Filmmaterial einsetzbar ist. Der bisherige Aufbau eines Film-Sichters beziehungsweise Schneidetisches mit einer analogen Mattscheibe, auf welcher von hinten das analoge Bild projiziert wird, wobei zwei Monitore beim Schneiden für die jeweils aneinander zu fügenden Filmabschnitte vorgesehen sein können, kann in vorteilhafter Weise nunmehr durch eine digitale Anzeigevorrichtung ersetzt werden, wobei das analoge Einzelbild 13 des Laufbildfilms mittels des Bildwandlers 14 in ein elektronisches Format in digitaler Form überführt wird. Hierdurch werden in vorteilhafter Weise gleichzeitig eine Beurteilung und eine Aufzeichnung der Einzelbilder 13 des Laufbildfilms ermöglicht. Betrachtet wird bei einer derartigen Anordnung dann gleich die digitalisierte Kopie. Mit der erfindungsgemäßen Anordnung eines Filmabtasters 10 kann als Bildwandler 14 jede handelsübliche Kamera eingesetzt werden.

## Patentansprüche

1. Filmabtaster (10) zur digitalen Archivierung eines auf einem Filmstreifen (11) in Form einer Sequenz von Einzelbildern (13) analog gespeicherten Laufbildfilms mit:
- einer Lichtquelle (12) zur Durchleuchtung eines jeweils abzubildenden Einzelbildbereichs (15) des Filmstreifens,
- einem opto-elektronischen Bildwandler (14) zur elektronischen Erfassung des jeweils abgebildeten Einzelbildbereichs, und
- einer optischen Abbildungseinheit (16) zur Abbildung des Einzelbildbereichs auf den Bildwandler,
**dadurch gekennzeichnet,**
**dass** die optische Abbildungseinheit (16) umfasst:
- eine reflektierende Projektionsfläche (18), und
- ein optisches Bauelement (19), welches dazu ausgelegt ist:
a) zumindest ein mittels der Lichtquelle (12) bei der Durchleuchtung des Einzelbildbereichs (15) erzeugtes Projektionslichtstrahlenbündel (B1) auf die Projektionsfläche (18) auszurichten, wobei das Projektionslichtstrahlenbündel (B1) in Richtung der Projektion zwischen dem optischen Bauelement (19) und der Projektionsfläche (18) innerhalb eines optischen Teilpfads verläuft, und
b) ein durch Reflexion des zumindest einen Projektionslichtstrahlenbündels (B1) an der Projektionsfläche (18) erzeugtes Reflexionslichtstrahlenbündel (B2) auf den Bildwandler (14) auszurichten, wobei das Reflexionslichtstrahlenbündel (B2) in einer zu der Richtung der Projektion entgegen gerichteten Reflexionsrichtung zwischen der Projektionsfläche (18) und dem optisches Bauelement (19) innerhalb desselben optischen Teilpfads verläuft.

2. Filmabtaster (10) nach Anspruch 1,
**dadurch gekennzeichnet,**
**dass** das optische Bauelement (19) dazu ausgelegt ist, eine direkte Lichtstrahllenkung von dem Einzelbildbereich (15) des Filmstreifens (11) zu dem Bildwandler (14) ohne die Beteiligung einer Reflexion an der Projektionsfläche (18) zu verhindern.

3. Filmabtaster (10) nach einem der vorhergehenden Ansprüche,
**dadurch gekennzeichnet,**
**dass** die Lichtquelle (12), die Projektionsfläche (18) und der Bildwandler (14) als drei Periphereinheiten (12, 14, 18) um das optische Bauelement (19) als Zentraleinheit herum angeordnet sind, wobei die Zentraleinheit zwischen zwei der drei Periphereinheiten auf einer diese beiden Periphereinheiten verbindenden ersten Gerade angeordnet ist und die verbleibende dritte Periphereinheit der drei Periphereinheiten auf einer zu der ersten Gerade orthogonalen zweiten Gerade, welche durch die Zentraleinheit führt, angeordnet ist.

4. Filmabtaster (10) nach Anspruch 3,
**dadurch gekennzeichnet,**
**dass** das optische Bauelement (19) durch einen halbdurchlässigen Spiegel ausgebildet ist.

5. Filmabtaster (10) nach einem der vorhergehenden Ansprüche,
**gekennzeichnet durch**
ein Absorptionselement (24), welches dazu ausgelegt ist, ein von dem Projektionslichtstrahlenbündel (B1) **durch** das optische Bauelement (19) abgezweigtes Nebenlichtstrahlenbündel (B3) zu absorbieren.

6. Filmabtaster (10) nach einem der vorhergehenden Ansprüche,
**dadurch gekennzeichnet,**
**dass** der Filmabtaster dazu ausgelegt ist, den in einem jeweiligen Einzelbild (13) gespeicherten Bildinhalt zumindest innerhalb vorgegebener Einzelbildabmessungen vollständig zu erfassen, wobei die Einzelbildabmessungen durch das für die Aufnahme des Laufbildfilms verwendete kinematografische Filmformat vorgegeben sind.

7. Filmabtaster (10) nach einem der vorhergehenden Ansprüche,
**gekennzeichnet durch**
eine Filmstreifenpositioniereinrichtung (23) zur Positionierung des Filmstreifens (11) in dem Einzelbildbereich (15).

8. Filmabtaster (10) nach Anspruch 7,
**dadurch gekennzeichnet,**
**dass** die Filmstreifenpositioniereinrichtung (23) dazu ausgelegt ist, den Filmstreifen (11) kontinuierlich durch den Einzelbildbereich (15) zu transportieren, insbesondere mit einer vorgebbaren konstanten Transportgeschwindigkeit (v).

9. Filmabtaster (10) nach Anspruch 8,
**gekennzeichnet durch**
eine innerhalb der optischen Abbildungseinheit (16) angeordnete dynamische Strahllenkungseinheit (25), welche dazu ausgelegt ist, in Abhängigkeit von der Transportgeschwindigkeit (v) das Projektionslichtstrahlenbündel (B1) auf dem Weg von dem Filmstreifen (11) zu der Projektionsfläche (18) so zu lenken, dass sich auf der Projektionsfläche (18) ein stehender Bildausschnitt ergibt.

10. Filmabtaster (10) nach Anspruch 8,
**dadurch gekennzeichnet,**
**dass** die Lichtquelle (12) dazu ausgelegt ist, synchronisiert mit der Filmstreifenpositioniereinrichtung (23) pulsförmig betrieben zu werden, wobei ein Lichtpuls erzeugt wird, wenn sich das jeweilige Einzelbild (13) in dem Einzelbildbereich (15) befindet.

11. Filmabtaster (10) nach Anspruch 10,
**dadurch gekennzeichnet,**
**dass** eine Pulsdauer zum pulsförmigen Betreiben der Lichtquelle (12) kürzer ist als die Zeit, die sich aus der Transportgeschwindigkeit (v) und einer vorgegebenen Streifenbreite ergibt, um die der Filmstreifen (11) weiterläuft, wobei die Streifenbreite in Abhängigkeit von einem Abbildungsmaßstab der Abbildungseinheit (16) durch eine Pixel-Breite des Bildwandlers (14) gegeben ist.

12. Filmabtaster (10) nach einem der vorhergehenden Ansprüche,
**dadurch gekennzeichnet,**
**dass** die Projektionsfläche (18) eine Oberflächenstrukturierung in einer Größenordnung aufweist, welche kleiner als das Verhältnis von Bildhöhe eines auf die Projektionsfläche (18) projizierten Zwischenbilds (17) zu Zeilenzahl und/oder Bildbreite des Zwischenbilds (17) zu Spaltenzahl ist, wobei Zeilenzahl und/oder Spaltenzahl durch die Auflösung des Bildwandlers gegeben sind.

13. Filmabtaster (10) nach einem der vorhergehenden Ansprüche,
**dadurch gekennzeichnet,**
**dass** die Projektionsfläche (18) zur Vermeidung einer Polarisationsebenenänderung zwischen dem Projektionslichtstrahlenbündel (B1) und dem Reflexionslichtstrahlenbündel (B2) eine mit einem metallpigmentiertem Lack beschichtete Oberfläche aufweist oder als retroreflektierende Leinwand ausgebildet ist

14. Filmabtaster (10) nach einem der Ansprüche 1 bis 12,
**dadurch gekennzeichnet,**
**dass** die Projektionsfläche (18) dazu ausgelegt ist, eine Polarisationsebenenänderung zwischen dem Projektionslichtstrahlenbündel (B1) und dem Reflexionslichtstrahlenbündel (B2) in Form einer Drehung der Polarisationsebene bei der Reflexion um 90 Grad nach rechts oder links um eine durch die Ausbreitungsrichtung der beiden Lichtstrahlenbündel (B1, B2) gegebene Achse zu bewirken.

15. Verfahren zur digitalen Archivierung eines auf einem Filmstreifen (11) in Form einer Sequenz von Einzelbildern (13) analog gespeicherten Laufbildfilms, umfassend:
- Durchleuchten eines jeweils abzubildenden Einzelbildsbereichs (15),
- Abbilden des Einzelbildbereichs auf einen opto-elektronischen Bildwandler (14), und
- elektronisches Erfassen des jeweils abgebildeten Einzelbildbereichs (15) mittels des Bildwandlers (14), **gekennzeichnet durch**
a) Ausrichten zumindest eines bei der Durchleuchtung des Einzelbildbereichs (15) erzeugten Projektionslichtstrahlenbündels (B1) auf eine Projektionsfläche (18) mittels eines optischen Bauelements (19), wobei das Projektionslichtstrahlenbündel (B1) in Richtung der Projektion zwischen dem optisches Bauelement (19) und der Projektionsfläche (18) innerhalb eines optischen Teilpfads verläuft, und
b) Ausrichten eines **durch** Reflexion des zumindest einen Projektionslichtstrahlenbündels (B1) an der Projektionsfläche (18) erzeugten Reflexionslichtstrahlenbündels (B2) auf den Bildwandler (14), wobei das Reflexionslichtstrahlenbündel (B2) in einer zu der Richtung der Projektion entgegen gerichteten Reflexionsrichtung zwischen der Projektionsfläche (18) und dem optisches Bauelement (19) innerhalb desselben optischen Teilpfads verläuft.
